# EUROPEAN PATENT APPLICATION

(11) **EP 2 515 200 A1**
(43) Date of publication of application: **24.10.2012**
(21) Application number: 09852255.0
(22) Date of filing: 14.12.2009
(51) Int. Cl.: G06F 1/32, G06F 1/28

(54) **ARITHMETIC PROCESSING DEVICE, INFORMATION PROCESSING DEVICE, AND METHOD FOR CONTROLLING SAME**

(71) Applicant: Fujitsu Limited, Kawasaki-shi, Kanagawa 211-8588 (JP)
(72) Inventor: WU, Wenhao, Kawasaki-shi Kanagawa 211-8588 (JP); OKANO, Hiroshi, Kawasaki-shi Kanagawa 211-8588 (JP); KAWABE, Yukihito, Kawasaki-shi Kanagawa 211-8588 (JP)
(74) Representative: Ward, James Norman
(86) International application number: PCT/JP2009/070854
(87) International publication number: WO 2011/074059

(57) **Abstract**

Instructions decoded by the instruction decoding part are issued to an arithmetic and logic part, a consumption current value that has been consumed by the arithmetic and logic part with instructions issued during a first predetermined period and a consumption current estimated value for a current that is consumed by the arithmetic and logic part with instructions issuable during a second predetermined period of the decoded instructions are calculated, and issuance of some instructions of the decoded instructions is inhibited in the second predetermined period in a case where a change amount of the consumption current estimated value with respect to the consumption current value exceeds a predetermined limit value.

## Description

### TECHNICAL FIELD

The present invention is related to a processor, an information processing apparatus and a control method thereof.

### BACKGROUND ART

As a technology of a processor, the following method is known. That is, a consumption current is estimated for each clock cycle using a value having correlation with a current consumption defined for each instruction. Then, when a change rate thereof is larger than a predetermined value, instructions are transposed in such a manner that a change amount may become smaller, or an instruction is replaced by a dummy instruction.

### PRIOR ART REFERENCE

### Patent Reference:

Patent Document 1: Japanese Laid-Open Patent Application No. 2004-334641
Patent Document 2: Japanese Laid-Open Patent Application No. 10-207859
Patent Document 3: Japanese Laid-Open Patent Application No. 2004-13820

### Non-patent Reference:

Non-Patent Document 1: "The SPARC Architecture Manual", version 9, SPARC International, Inc., Santa Clara, California, SAV09R1459912

### SUMMARY OF INVENTION

### PROBLEM TO BE SOLVED BY INVENTION

An object is to provide a processor that can positively reduce a change in a consumption current using a simple configuration.

### MEANS TO SOLVE THE PROBLEM

Instructions decoded by an instruction decoding part are issued to an arithmetic and logic part, a consumption current value the arithmetic and logic part has consumed by instructions issued during a first predetermined period and a consumption current expected value that the arithmetic and logic part consumes by instructions issuable during a second predetermined period are calculated, and in a case where a change amount of the consumption current expected value with respect to the consumption current value exceeds a predetermined limit value, issuance of some instructions is inhibited in the second predetermined period.

### ADVANTAGEOUS EFFECT OF THE INVENTION

By the above-mentioned configuration, it is possible to provide a configuration by which it is possible to positively reduce a change in a consumption current in a processor by a simple configuration.

### BRIEF DESCRIPTION OF DRAWINGS

FIG. 1 is an internal block diagram of a processor for illustrating instruction issuance control in the processor of a reference example;
FIG. 2 is an internal block diagram of a processor for illustrating instruction issuance control in the processor of an embodiment;
FIG. 3 is a block diagram particularly depicting an instruction issuance control part and an arithmetic and logic unit extracted from the processor depicted in FIG. 2;
FIG. 4 is a diagram (No. 1) for illustrating a method of instruction issuance control in the processor of the embodiment;
FIG. 5 is a diagram (No. 2) for illustrating the method of instruction issuance control in the processor of the embodiment;
FIG. 6 depicts a configuration example of a current value table for illustrating the method of the instruction issuance control in the processor of the embodiment;
FIG. 7 illustrates an example of a case where issuance of instructions is restricted in the processor of the embodiment;
FIG. 8 illustrates an example of a case where a dummy instruction is issued in the processor of the embodiment;
FIG. 9 depicts an example of relationships between instructions and addresses in a program for illustrating the method of instruction issuance control in the processor of the embodiment;
FIG. 10A is an operation flowchart (No. 1 at a time of an increase in a consumption current according to a monitoring method 1) for illustrating the method of instruction issuance control in the processor of the embodiment;
FIG. 10B is an operation flowchart (No. 2 at a time of an increase in a consumption current according to the monitoring method 1) for illustrating the method of instruction issuance control in the processor of the embodiment;
FIG. 11 depicts a configuration example of a circuit that carries out some operations in the flowcharts of FIGs. 10A and 10B;
FIG. 12 is an operation flowchart (at a time of a decrease in a consumption current according to the monitoring method 1) for illustrating the method of instruction issuance control in the processor of the embodiment;
FIG. 13A is an operation flowchart (No. 1 at a time of an increase in a consumption current according to a monitoring method 2) for illustrating the method of instruction issuance control in the processor of the embodiment;
FIG. 13B is an operation flowchart (No. 2 at a time of an increase in a consumption current according to the monitoring method 2) for illustrating the method of instruction issuance control in the processor of the embodiment;
FIG. 14 is an operation flowchart (at a time of a decrease in a consumption current according to the monitoring method 2) for illustrating the method of instruction issuance control in the processor of the embodiment; and
FIG. 15 is a block diagram depicting a hardware configuration example of an information processing apparatus to which the processor of the embodiment is applicable.

### MODE FOR CARRYING OUT THE INVENTION

Below, the embodiment will be described.

According to the embodiment, in a processor that is a semiconductor intergraded circuit, power-supply noise is reduced by controlling the number of instructions to be issued or an issuance frequency thereof. It is noted that as a specific example of the processor, a CPU (Central Processing Unit), a GPU (Graphical Processing Unit), a DSP (Digital Signal Processor) or the like may be cited.

A technology of reducing consumed power in a processor is an important technology for reducing consumed power of an information communication apparatus. In order to reduce consumed power of a processor, a method of reducing an operation rate of a circuit is effective, such as clock gating of providing clock pulses only to registers that are required to carry out a process, enabling only RAM (Random Access Memories) that are required to carry out a process, or the like. However, in these methods, a reduction in dI/dt that is a time rate of change of current is desired in order to avoid generation of power-supply noise caused by a difference in a consumption current occurring between a time of carrying out a process and a time of not carrying out a process.

As a method for reducing power-supply noise inside an LSI (Large Scale Integrated circuit), there is a method of mounting a capacitor cell having a capacitance component or a decoupling capacitance cell inside the LSI, or also mounting a decoupling capacitor on a package or a system board. However, it is considered that an increase in a chip area, an increase in a leakage current and/or the like occurs when a decoupling capacitance cell is used.

Further, as a method for controlling a circuit for reducing power-supply noise, there is a method of reducing a time rate of change of current dI/dt into a low level by reducing a clock frequency into a low level at a time of starting operation of a circuit. Furthermore, there is a method of estimating consumption currents of instructions at a stage of compiling software, and adjusting issuance of instructions by the software.

However, in the above-mentioned method of reducing a time rate of change of current by reducing a clock frequency at a time of starting operation of a circuit, a current change amount is not monitored on a cycle basis, and a clock signal is provided in such a manner that a clock frequency is gradually changed over a predetermined period of time. Therefore, unless a large margin is provided for a clock frequency, a case is considered where it is not possible to deal with power-supply noise caused by a large current change. Further, a situation is assumed where a clock frequency is excessively delayed for low noise. That is, in this method, since a clock frequency is controlled not according to noise, it is considered that control preciseness is low.

Further, according to the method of adjusting issuance of instructions by software, such as, as mentioned above, estimating consumption currents of instructions at a stage of compiling software and changing the order of the instructions, it is considered that object code becomes larger because scheduling is carried out by software. Further, since a compiler is required which can understand all the dependency of instructions on the cycle basis, it is considered that realization is difficult. A case is assumed where in a case of pipeline interlock or the like occurring, it is not possible to deal with it by software. Pipeline interlock is a mechanism for detecting and avoiding a hazard. A data dependent hazard means a situation in which since plural instructions are executed in a manner of being jumbled together, the order of writing and/or reading of operation results becomes different from having been intended by a machine-language programmer, and a result different from an expected one occurs. Detecting a hazard and stopping the pipeline is referred to as pipeline interlock. In pipeline interlock, a consumption current is reduced since execution of instructions is stopped. In order to mitigate such a reduction in a consumption current, "a dummy circuit that only executes a dummy instruction" is used. A "dummy instruction" means an instruction that does not influence subsequently executed instructions. A "dummy circuit" is a circuit that consumes a current by executing a dummy instruction and mitigates a reduction in a consumption current. Especially in a large-scale system, a scale of a dummy circuit for dealing with a reduction in a consumption current caused by pipeline interlock becomes larger, and it is considered that a chip area increases, consumed power increases, or so.

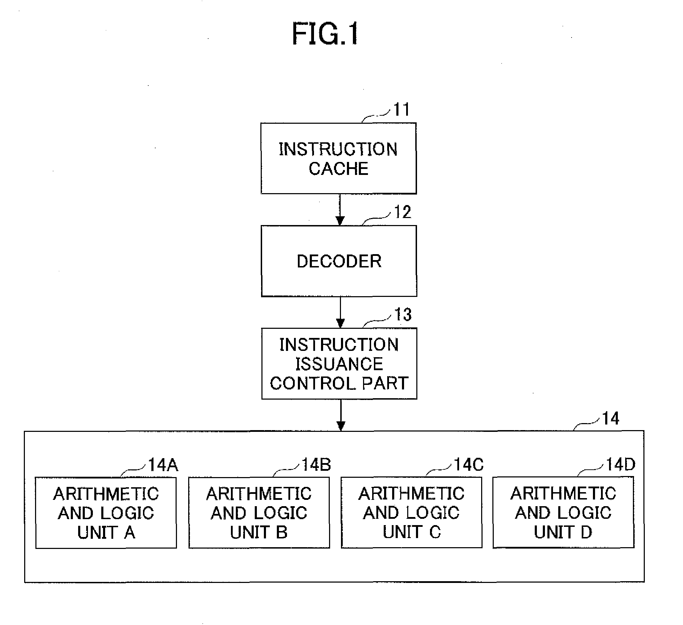

Next, in order to compare with the embodiment that will be described, a reference example of a processor will be described. FIG. 1 is a block diagram depicting an internal configuration of a processor as a reference example. A processor of FIG. 1 is, for example, a SPARC (Scalable Processor Architecture) processor, and includes an instruction cache (instruction storing part) 11, a decoder (instruction decoding part) 12, an instruction issuance control part 13 and an arithmetic and logic mechanism 14. The arithmetic and logic mechanism 14 includes arithmetic and logic units (arithmetic and logic parts) 14A, 14B, 14C and 14D.

The instruction cache 11 is a cache memory that stores a program. The decoder 12 decodes instructions included in the program. The instruction issuance control part 13 issues the instructions to the arithmetic and logic units 14A, 14B, 14C and 14D. The arithmetic and logic units (ALU) 14A, 14B, 14C and 14D execute the issued instructions. Further, the arithmetic and logic units 14A, 14B, 14C and 14D share calculation functions, respectively. For example, the arithmetic and logic unit 14A may carry out fixed-point adding and subtracting operations; the arithmetic and logic unit 14B may carry out fixed-point multiplying operations; the arithmetic and logic unit 14C may carry out floating-point adding and subtracting operations; and the arithmetic and logic unit 14D may carry out floating-point multiplying operations. It is noted that it is not necessary to limit to this example, and, for example, two or more of plural arithmetic and logic units may carry out the same arithmetic or logic function. Below, particularly, operations concerning issuance of instructions of a program will be described, out of the operations in the processor.

The decoder 12 fetches (obtains) instructions from the instruction cache 11, decodes them and transfers them to the instruction issuance control part 13. The instruction issuance control part 13 issues instructions transferred from the decoder to the arithmetic and logic units 14A through 14D. More specifically, the instruction issuance control part 13 stores in an internal register (not depicted) instructions transferred from the decoder 12, and determines entries in the internal register which store issuable instructions. The instruction issuance control part 13 selects instructions to be issued from those stored in the determined entries. Selection of instructions to be actually issued is carried out for each arithmetic and logic unit that can execute a stored instruction. At this time, a priority order is given among instructions that the same arithmetic and logic unit can execute, and instructions to be issued are selected according to the priority order. The instruction issuance control part 13 issues selected instructions to the corresponding arithmetic and logic unit, and releases the corresponding entry after issuance of an instruction.

There is a likelihood of generating power-supply noise in the processor of the above-mentioned reference example since a change in a consumption current occurring when the arithmetic and logic units 14A, 14B, 14C and 14D execute instructions when the instruction issuance control part 13 issues the instructions is not particularly considered.

The embodiment has a configuration of preventing generation of power-supply noise. In a processor according to the embodiment, estimated values of currents that have been consumed by instructions that have been issued during past several cycles are stored. It is noted that the above-mentioned estimated values are estimated values of currents consumed by the entirety of the processor. Then, an increasing amount of a consumption current value that is approximately calculated from issuable instructions at a present cycle with respect to the stored current values is calculated. Then, it is determined whether the calculated increasing amount exceeds an allowable current change amount (referred to as a limit value) of the processor. In a case where it exceeds the limit value, issuance of instructions is restricted so that the limit value will not be exceeded. The limit value may be obtained from a result of noise analysis simulation or from examining measured values.

Or, in the processor according to the embodiment, estimated values of currents consumed by instructions issued during past several cycles are stored and, with respect to these current values, a decreasing amount of a consumption current value that is approximately calculated from issuable instructions at a present cycle is calculated. Then, it is determined whether the calculated decreasing amount exceeds a limit value of the processor. In a case where it exceeds the limit value, a dummy instruction(s) is issued so that the limit value will not be exceeded.

As a dummy instruction, an existing instruction that does not influence execution of a program may be used, such as an instruction of, in a case of the SPARC architecture, using a Global register zero (gO) as a destination to which an operation result will be stored, for example. Alternatively, a new dummy instruction may be defined and used, such as an instruction that merely operates an existing circuit but does not change the state of a processor. A dummy instruction is desired to be an instruction that changes a consumption current as much as possible, as long as it does not exceed a limit value. It is noted that Global register zero (gO) means a global register from which "0" is always obtained when it is read, and which has a value that is not changed even when writing is carried out thereto.

Or, in an instruction issuance control unit according to the embodiment, instructions that have been issued during past several cycles or estimated values of currents that have been consumed by the instructions are stored. Then, with respect to these current values, an increasing amount of a consumption current value that is approximately calculated from issuable instructions at a present cycle is calculated. Then, it is determined whether the calculated increasing amount exceeds a limit value of the processor. In a case where it exceeds the limit value, issuance of instructions is restricted so that the limit value will not be exceeded.

Or, in an instruction issuance control unit according to the embodiment, instructions that have been issued during past several cycles or estimated values of currents that have been consumed by the instructions are stored. Then, with respect to these current values, a decreasing amount of a consumption current value that is approximately calculated from issuable instructions at a present cycle is calculated. Then, it is determined whether the calculated decreasing amount exceeds a limit value of the processor. In a case where it exceeds the limit value, a dummy instruction(s) that does not influence subsequent executing instructions is issued so that the limit value will not be exceeded.

Further, according to the embodiment, in a case of P(t) > P(t-1, t-N), issuance of instructions at a present cycle is restricted so that a condition of P(t) ≦ P(t-1, t-N) + ΔP1 may be met. It is noted that the variable t denotes a present cycle, P(t-1, t-N) denotes an average consumption current that is estimated from instructions of past N cycles, ΔP1 denotes a limit value allowable in the processor and P(t) denotes a consumption current value that is estimated from instructions issuable at the present cycle.

Further, according to the embodiment, in a case of P(t) < P(t-1, t-N), a dummy instruction(s) that does not influence subsequent executing instructions is issued at a present cycle so that a condition of P (t) ≧ P (t-1, t-N) - ΔP2 may be met. The same as the above-mentioned, t denotes a present cycle, P(t-1, t-N) denotes an average consumption current that is estimated from instructions of past N cycles, ΔP2 denotes a limit value allowable in the processor and P(t) denotes a consumption current value that is estimated from instructions issuable at the present cycle.

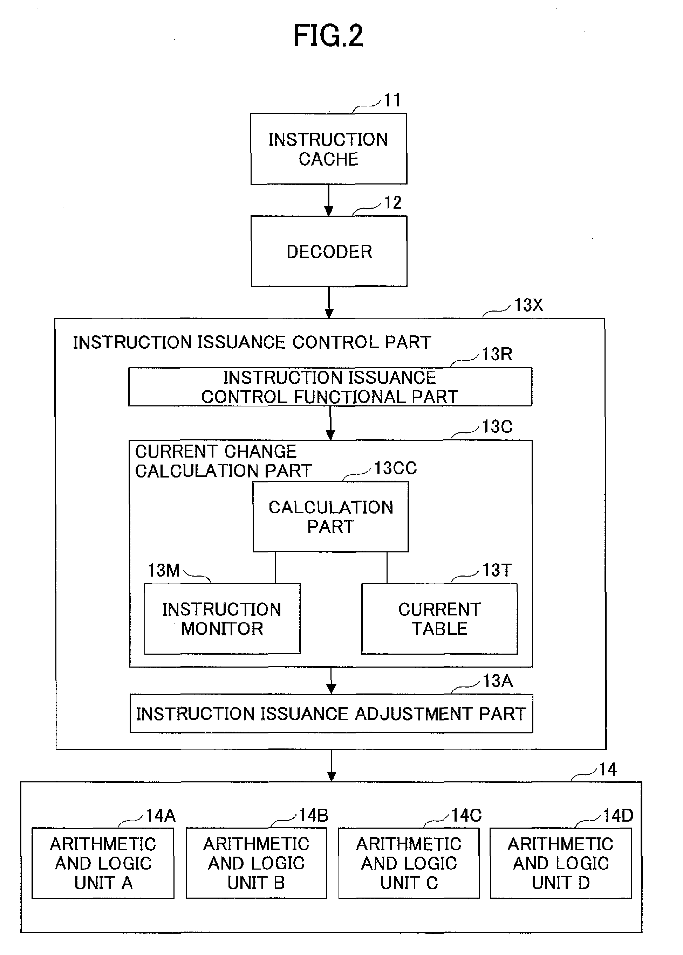

FIG. 2 is a block diagram depicting an internal configuration of a processor according to the embodiment. A processor of FIG. 2 is, for example, a SPARC processor, and includes an instruction cache 11, a decoder 12, an instruction issuance control part 13X and an arithmetic and logic mechanism 14. The arithmetic and logic mechanism 14 includes arithmetic and logic units 14A, 14B, 14C and 14D.

The instruction cache 11 is a cache memory that stores a program. The decoder 12 decodes instructions included in the program. The instruction issuance control part 13X issues the instructions to the arithmetic and logic units 14A, 14B, 14C and 14D. The arithmetic and logic units (ALU) 14A, 14B, 14C and 14D execute the issued instructions. Further, it is noted that the arithmetic and logic units 14A, 14B, 14C and 14D share calculation functions, respectively, as mentioned above.

According to the embodiment, an instruction issuance mechanism (i.e., the instruction issuance control part 13X in the processor) has a current change calculation part 13C and an instruction issuance adjustment part 13A, in addition to an instruction issuance control functional part 13R that has a function of an instruction issuance control part of a prior art case. The current change calculation part 13C calculates a current change based on types and the number of instructions that are issued, and provides an instruction to restrict instruction issuance when the calculated current change exceeds a previously set threshold. The instruction issuance adjustment part 13A receives the instruction and limits instructions to be issued. As a result, it is possible to reduce power-supply noise caused by a time rate of change of current dI/dt.

Below, operations concerning issuance of instructions of a program will be particularly described, out of operations of the processor of FIG. 2. The decoder 12 fetches instructions from the instruction cache 11, decodes them and transfers them to the instruction issuance control part 13X. In the instruction issuance control part 13X, the instruction issuance control functional part 13R selects issuable instructions using a result of the decoding, and the current change calculation part 13C carries out the following issuance control for the selected instructions based on the consumption current change.

The current change calculation part 13C of the instruction issuance control part 13X determines entries in an internal register which store issuable instructions. Then, based on types, the number and/or the like of the issuable instructions stored in the determined entries, an consumption current value when the arithmetic and logic units 14A, 14B, 14C and 14D execute the issuable instructions is calculated. The current change calculation part 13C further calculates an average consumption current for past several cycles using the number and types of instructions. The maximum number of instructions issuable during a predetermined period of time is determined to be within such a range that a change amount of a consumption current value (also simply referred to as a change amount) with respect to the past average consumption current when the issuable instructions are executed will not exceed a specific threshold (i.e., a limit value ΔI), and is transferred to the instruction issuance adjustment part 13A. The above-mentioned predetermined period of time is, in the embodiment, 1 cycle. The predetermined period of time is not limited to 1 cycle, and may be several cycles. It is noted that in a case of the processor of a superscalar system as in the embodiment, the upper limit of the number of simultaneously issuable instructions is defined concerning hardware, and it is assumed that the number of simultaneously issuable instructions is to be equal to or less than the above-mentioned upper limit. In the processor according to the embodiment, the number of the arithmetic and logic units 14A, 14B, 14C and 14D is 4, and thus, the upper limit of simultaneously issuable instructions is 4.

The instruction issuance adjustment part 13A receives the maximum number of instructions issuable during the predetermined period of time, and selects instructions to be actually issued based on respective arithmetic and logic units of the arithmetic and logic units 14A, 14B, 14C and 14D corresponding to respective instructions to be issued. Further, in a case where there are plural instructions issuable simultaneously, a priority order is provided among the plural instructions, and instructions are selected according to the priority order so that the number of instructions to be issued per 1 cycle may be within the maximum number of issuable instructions. It is noted that as a method of determining the priority order, instructions may be issued from among those currently issuable, from those having the earlier execution order in the program (from those having the smaller addresses in a case where the program is stored in the main memory when no branch instructions are included), i.e., based on the order of occurrences of instructions in the program, for example. Alternatively, the number of instructions may be limited by limiting the frequency of instruction issuances in such a manner of issuing instructions only at 1 cycle out of plural cycles, while the number of instructions issued per 1 cycle is maintained as it is. Thus, the instruction issuance control part 13X issues instructions to the corresponding ones of the arithmetic and logic units 14A, 14B, 14C and 14D in such a manner that the number of issuing instructions is limited as appropriate. After that, the instruction issuance control part 13X releases the entries of the issued instructions. Thus, instructions are issued as many as possible in such a range that the limit value is not exceeded.

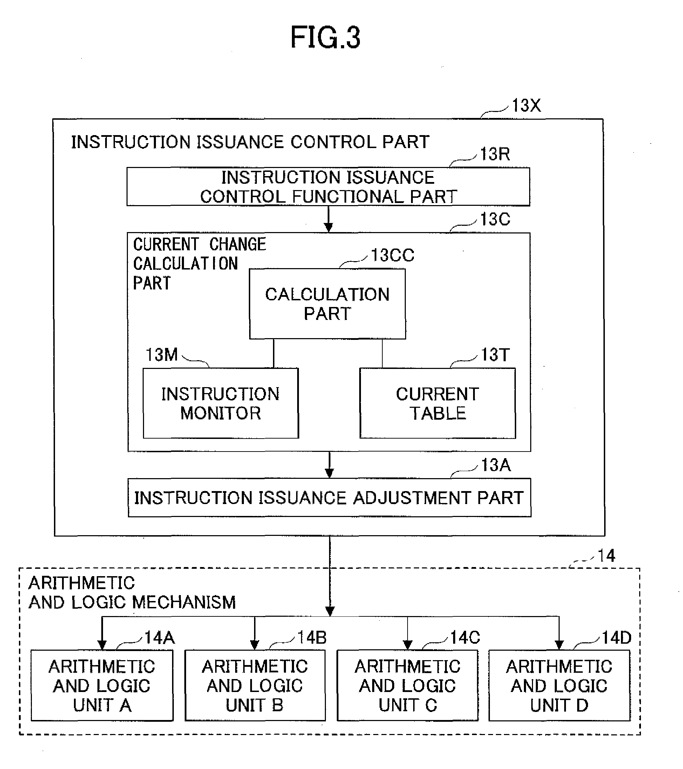

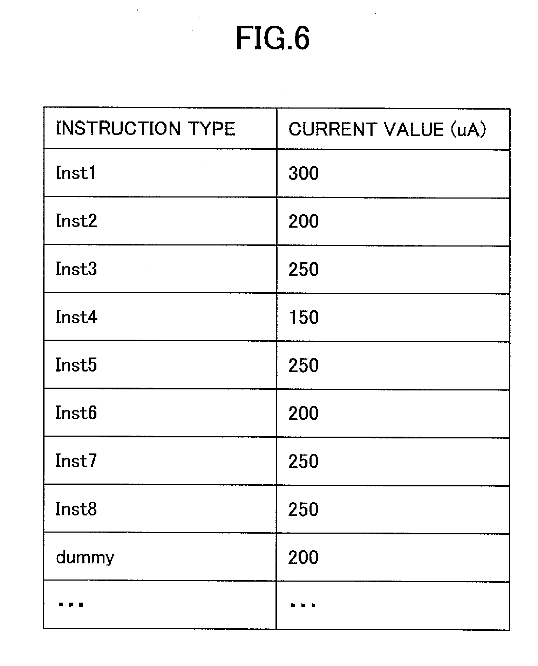

That is, the current change calculation part 13C is provided between the decoder 12 and the arithmetic and logic units 14A, 14B, 14C and 14D, and as depicted in FIG. 3, has a calculation part 13CC, an instruction monitor 13M and a current table 13T. The instruction monitor 13M monitors the types and the number of issued of instructions that have been issued at a predetermined number of cycles up to the present time. The current table 13T stores, for each type of an instruction, a corresponding current estimated value (see FIG. 6 described later). It is noted that the current table 13T may store a current estimated value for each type of an instruction as mentioned above, or may store a current value per one instruction without regard to the types of instructions. The types and the current estimated values of instructions to be stored may have a configuration may be provided such that current estimated values may be changed by a program so that these may be adjusted at a time of operation of the LSI that includes the processor. Further, the above-mentioned current estimated values depending on the types of instructions may be previously obtained from power simulation that is carried out at a time of design of the LSI, for example, or, may be set as a result of consumed power for each instruction being obtained as a result of consumed power of the entire processor in an actually manufactured chip being measured.

The calculation part 13CC of the current change calculation part 13C uses an instruction history for predetermined number of cycles stored by the instruction monitor 13M and currently issuable instructions, reads the current table 13T, and estimates a change amount of a consumption current. In a case where a consumption current increases and a current increasing amount as a change amount of a consumption current exceeds a limit value, the instruction issuance adjustment part 13A obtains the maximum number of issuable instructions so that the increasing amount may be equal to or less than the limit value, and outputs the maximum number of issuable instructions and the current calculation result. That is, in this case, by restricting issuance of instructions to be currently issued, a consumption current in the arithmetic and logic units 14A, 14B, 14C and 14D is reduced, and the increasing amount is caused to be equal to or less than the limit value. On the other hand, in a case where a consumption current decreases and a current decreasing amount as a change amount of a consumption current exceeds a limit value, the instruction issuance adjustment part 13A obtains the required number of dummy instructions to be issued so that the decreasing amount may be equal to or less than the limit value, and outputs the required number of dummy instructions to be issued and the current calculation result. That is, in this case, by issuing a dummy instruction(s) in addition to instructions that originally exit in the program, a consumption current in the arithmetic and logic units 14A, 14B, 14C and 14D is increased, and the decreasing amount is caused to be equal to or less than the limit value.

The instruction issuance adjustment part 13A limits instructions to be issued from the instruction issuance control part 13X during a predetermined period of time or issues the required number of dummy instructions, according to the maximum number of issuable instructions or the required number of dummy instructions, that is output from the current change calculation part 13C.

According to the embodiment, by providing the current change calculation part 13C and the instruction issuance adjustment part 13A in the instruction issuance control part 13X of the processor, it is possible to carry out current change control with higher precision depending on instructions that are actually executed.

Below, examples of methods of calculating a consumption current change will be described. As methods of calculating a consumption current change, there are a monitoring method 1 and a monitoring method 2, and any one of these may be used.

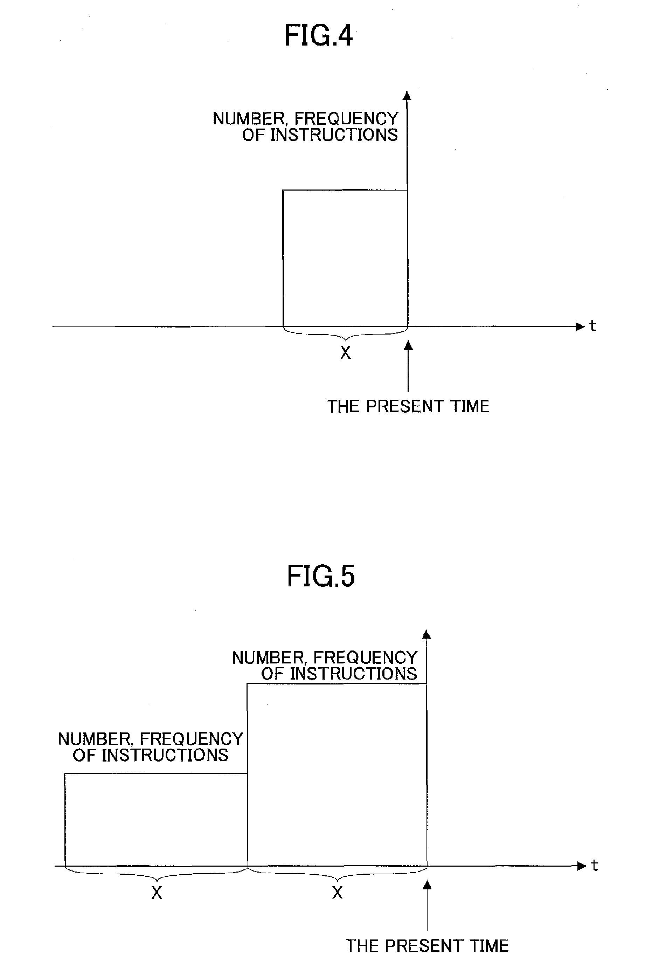

First, with FIG. 4, the monitoring method 1 will be described. According to the monitoring method 1, based on the number of instructions or an instruction issuance frequency at immediately preceding X cycles, the number of instructions to be issued or an instruction issuance frequency at the present cycle is controlled. Below, a specific example will be described.

The maximum allowable current change value (i.e., a limit value) ΔI is previously set in the current change calculation part 13C. The calculation part 13CC of the current change calculation part 13C reads the instruction monitor 13M and the current table 13T, and calculates the average of the current estimated values of the instructions that have been issued at the immediately preceding X cycles (a calculation result will be referred to as A). Further, the current estimated value of the currently issuable instructions is also calculated (a calculation result will be referred to as B). Next, the difference in the current values B - A is calculated, and, when B - A > ΔI, the maximum number of issuable instructions is given to the instruction issuance adjustment part 13A from the current change calculation part 13C. On the other hand, when B - A < -ΔI, the required number of dummy instructions is indicated to the instruction issuance adjustment part 13A from the current change calculation part 13C. Calculation of the consumption current change may be carried out every 1 cycle or may be carried out every certain period of cycles. A method of carrying out every certain period of cycles is a method of, not carrying out calculation of a consumption current change every cycle, but carrying out calculation of a current change every predetermined number of cycles.

Next, with FIG. 5, the monitoring method 2 will be described. According to the monitoring method 2, based on the number of instructions or an instruction issuance frequency at the present and immediately preceding X cycles, including the present cycle, and also the number of instructions or an instruction issuance frequency at further preceding X cycles, the number of instructions to be issued or an instruction issuance frequency at the present cycle is controlled. Below, a specific example will be described.

Also according to the monitoring method 2, the maximum allowable current change value (i.e., a limit value) ΔI is previously set in the current change calculation part 13C. The calculation part 13CC of the current change calculation part 13C reads the instruction monitor 13M and the current table 13T, and calculates the average or the sum of the current estimated values of the instructions that have been issued at the present and immediately preceding X cycles (a calculation result will be referred to as A) including the present cycle and the average or the sum of the current estimated values of the instructions that have been issued at the further preceding X cycles (a calculation result will be referred to as B), respectively, and compares them mutually. When B - A > ΔI, the maximum number of the currently issuable instructions is given to the instruction issuance adjustment part 13A from the current change calculation part 13C. On the other hand, when B - A < -ΔI, the required number of dummy instructions is indicated to the instruction issuance adjustment part 13A from the current change calculation part 13C. The above-mentioned value of X is set according to a frequency band of power-supply noise to be dealt with. It is noted that a noise of a high frequency band is removed using a decoupling cell or the like mounted on the chip, and therefore, the frequency band of the above-mentioned power-supply noise is a medium and low frequency band. Generally speaking, a noise having a high frequency has a short period and a noise having a low frequency has a long period. Therefore, by appropriately adjusting the above-mentioned value X depending on the frequency band of power-supply noise to be dealt with, it is possible to monitor the power-supply noise. Also in this case, calculation of a consumption current change may be carried out every 1 cycle or may be carried out every certain period of cycles. A method of carrying out every certain period of cycles is a method of, not carrying out calculation of a consumption current change every cycle, but carrying out calculation of a consumption current change every predetermined number of cycles.

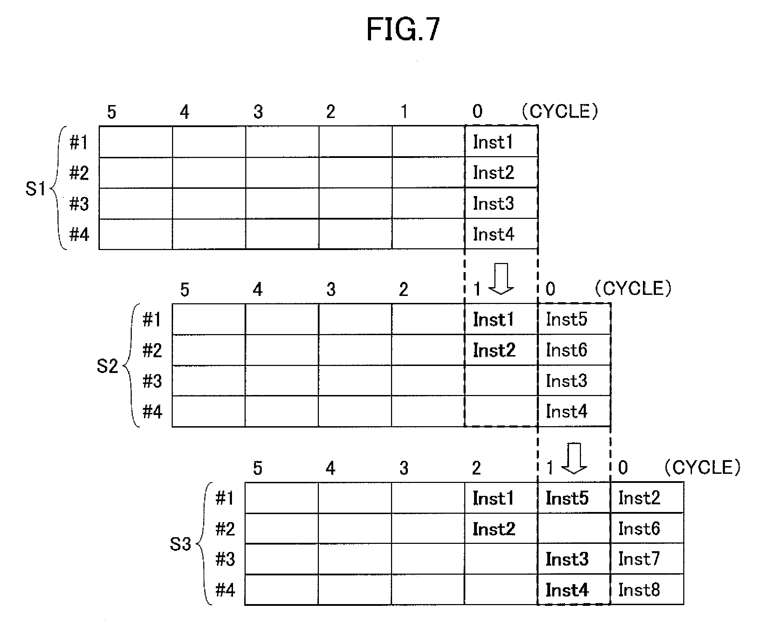

Next, with FIGs. 6 and 7, operations at a time of an increase in a consumption current in the processor according to the above-described embodiment will be described using a specific operation example in a case of using the above-mentioned monitoring method 1.

FIG. 6 depicts one example of the above-mentioned current table 13T. In the current table 13T of this example, types of respective instructions Inst1, Inst2, ..., Inst8 are stored. Further, in the current table 13T, 300, 200, ..., 250 [µA] are stored, respectively, as consumption current values in cases where the corresponding arithmetic and logic units of the above-mentioned four arithmetic and logic units 14A through 14D execute the respective types of instructions.

Further, it is assumed that in the current change calculation part 13C, ΔP1 - 500[µA] is set as a current change limit value (which may be simply referred to as a limit value). Further, as mentioned above, the number of simultaneously issuable instructions is a maximum of 4 (#1, #2, #3 and #4) in the processor.

FIG. 7 depicts instructions that have been issued at the past 5 cycles ("5" through "1") and instructions issuable at the present cycle "0", at each of points of time S1, S2 and S3. For example, FIG. 7 depicts that, at the point of time S1 on the top, no instructions have been issued during the past 5 cycles, and currently issuable instructions are Inst1, Inst2, Inst3 and Inst4.

Further, in FIG. 7, it is assumed that a consumption current value per 1 instruction in a case where each of the simultaneously issuable instructions #1, #2, #3 and #4 is not executed is 20 [µA].

Further, a monitoring period of time is set as N = 4 [cycles]. In a case of the point of time S1 in FIG. 7, any one of the simultaneously issuable instructions #1, #2, #3 and #4 has not been executed during the past 4 cycles ("4" through "1"). Therefore, the consumption current of the arithmetic and logic units 14A, 14B, 14C and 14D during the period (which is also simply referred to as a consumption current) is 20×4×4 = 320 [µA], and the average consumption current P(t-1, t-4) per 1 cycle in the past 4 cycles is obtained as 320/4 = 80 [µA]. On the other hand, the consumption current P(t) of the currently issuable instructions Inst1, Inst2, Inst3 and Inst4 is obtained as 300+200+250+150 = 900 [µA]. As a result, the change amount is obtained as P (t) - P (t-1, t-4) = 820 [µA], and is larger than the limit value ΔP1 = 500 [µA] by 320 [µA]. Therefore, the number of instructions to be issued is restricted at the cycle subsequent to the monitoring period of 4 cycles. As a result, the instruction issuance adjustment part 13A issues instructions that have been limited. In the example of FIG. 7, according to the address order, the instructions Inst1 and Inst2 are selected (the maximum number of issuable instructions = 2). This is because if the instruction Inst3 is further selected, the change amount in the case where the total 3 instructions Inst1, Inst 2 and Inst 3 are issued becomes 300+200+250+20-80 = 690 [µA], and exceeds the limit value 500 [µA]. In this case, consequently, the two instructions Inst1 and Inst2 earlier in the address order are issued out of the four currently issuable instructions Inst1, Inst2, Inst3 and Inst4, and issuance of the remaining two instructions Inst3 and Inst4 is delayed to the next cycle and/or later (the point of time S2 on the middle in FIG. 7).

Next, in the case of the point of time S2 on the middle of FIG. 7, the currently issuable instructions are the four instructions Inst5, Inst6, Inst3 and Inst4. Thereamong, the two instructions Inst3 and Inst4 are those for which issuance has been delayed at the preceding cycle as mentioned above, and the other two instructions Inst5 and Inst6 are instructions newly given to the instruction issuance control part 13X. In this case, the average current value P(t+1-1, t+1-4) in the monitoring period of past 4 cycles is obtained as (20×4×3+20×2+300+200)/4 = 195 [µA]. On the other hand, the consumption current P(t+1) of the above-mentioned issuable 4 instructions Inst5, Inst6, Inst3 and Inst4 is obtained as 250+200+250+150 = 850 [µA]. As a result, the change amount P(t+1) - P(t+1-1, t+1-4) = 655 [µA] is obtained, and is greater than the limit value ΔP1 - 500 [µA] by 155 [µA]. Therefore, the number of instructions to be issued at the cycle subsequent to the monitoring period of time of 4 cycles is restricted. In the example of FIG. 7, the 3 instructions Inst3, Inst4 and Inst5 are selected according to the address order (the maximum number of issuable instructions = 3). Consequently, the 3 instructions Inst3, Inst4 and Inst5 are issued, and the remaining 1 instruction Inst6 is delayed to the next cycle or later (the point of time S3 on the bottom of FIG. 7).

It is noted that it is also possible to provide the configuration in which the maximum number of issuable instructions differs depending on the magnitude of the current by which the limit value is exceeded. Further, as mentioned above, selection of instructions to be issued is carried out in a manner in which selecting is made according to the address order of the instructions. Thus, adjustment is made in such a manner that instructions are issued simultaneously as many as possible in such a range that the limit value is not exceeded. Further, it is also possible to preferentially issue instructions which have been delayed at the preceding cycle(s).

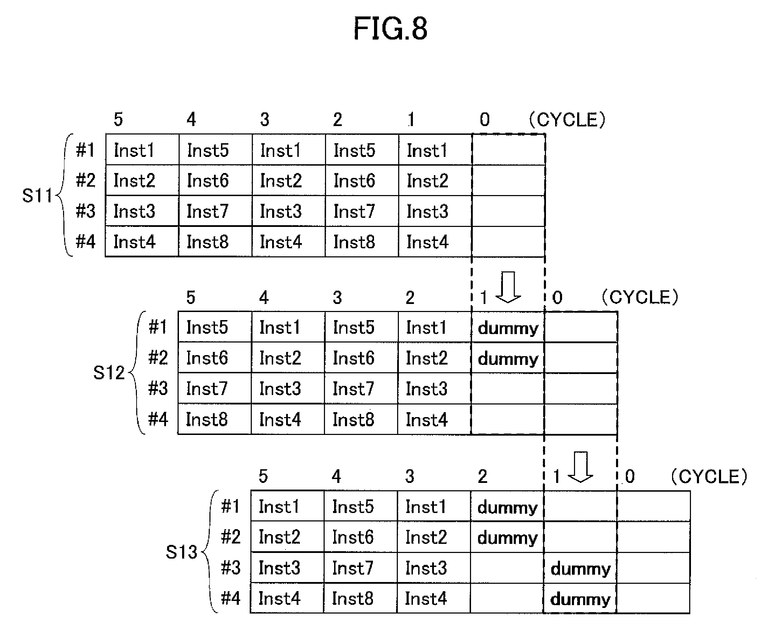

Next, with FIGs. 6 and 8, operations at a time of a decrease in a consumption current in the processor according to the above-described embodiment will be described using a specific operation example in a case of using the above-mentioned monitoring method 1.

In the current change calculation part 13C, a limit value ΔP2 = 500 [µA] is set, the same as the above-mentioned ΔP1, and it is assumed that the number of simultaneously issuable instructions is a maximum of 4, the same as the above-mentioned. Further, the same as the above-mentioned, it is assumed that a consumption current value per 1 instruction in a case where each of the simultaneously issuable instructions #1, #2, #3 and #4 is not executed is 20 [µA]. Further, the same as the above-mentioned, a monitoring period of time is set as N = 4 [cycles].

In a case of the point of time S11 on the top of FIG. 8, instructions that have been issued during the monitoring period of time of the past 4 cycles ("4" through "1") are monitored by the instruction monitor 13M. Referring to the example of the current table 13T, the average current value P(t-1, t-4) in the past 4 cycles is obtained as 925 [µA]. On the other hand, since issuable instructions do not particularly exist at the present time (cycle "0"), the current value P(t) is obtained as 80 [µA]. As a result, the change amount is obtained as P (t-1, t-4) - P (t) - 845 [µA], and is greater than the limit value ΔP2 = 500 [µA] by 345 [µA]. Therefore, the current change calculation part 13C determines the required number of dummy instructions, and gives it to the instruction issuance adjustment part 13A. According to the current table 13T of FIG. 6, the consumption current per 1 dummy instruction (dummy) = 200 [µA]. Therefore, in order to cause the change amount to be equal to or less than 345 [µA], since 200 < 345 + 20 [µA], and 200×2 = 400 > 345+20×2 [µA], two dummy instructions are required. Therefore, an instruction of the required number of dummy instructions = 2 is indicated to the instruction issuance adjustment part 13A so that two dummy instructions (dummy and dummy) are to be issued as instructions #1 and #2 of simultaneously issuable instructions. According to the instruction, the instruction issuance adjustment part 13A issues two dummy instructions (dummy and dummy) as instructions #1 and #2 of simultaneously issuable instructions (point of time S12 on the middle of FIG. 8).

Further, in a case of the point of time S12 on the middle of FIG. 8, also no issuable instructions exist at the next cycle ("0"). Therefore, the average current value P(t+1-1, t+1-4) in the past 4 cycles is obtained as 797.5 [µA], and the current value P(t+1) of currently issuable instructions is obtained as 80 [µA]. As a result, the change amount therebetween is obtained as P(t+1-1, t+1-4) - P(t+1) - 717.5 [µA], and is greater than the limit value ΔP2 = 500 [µA] by 217.5 [µA]. In order to cause the change amount to be equal to or less than 217.5 [µA], since 200 < 217.5 + 20 [µ A], and 200×2 = 400 > 217.5+20×2 [µA], two dummy instructions are required. Therefore, an instruction of the required number of dummy instructions = 2 is indicated to the instruction issuance adjustment part 13A so that two dummy instructions (dummy and dummy) are to be issued as instructions #3 and #4 of simultaneously issuable instructions. According to the instruction, the instruction issuance adjustment part 13A issues two dummy instructions (dummy and dummy) as instructions #3 and #4 of simultaneously issuable instructions (point of time S13 on the bottom of FIG. 8).

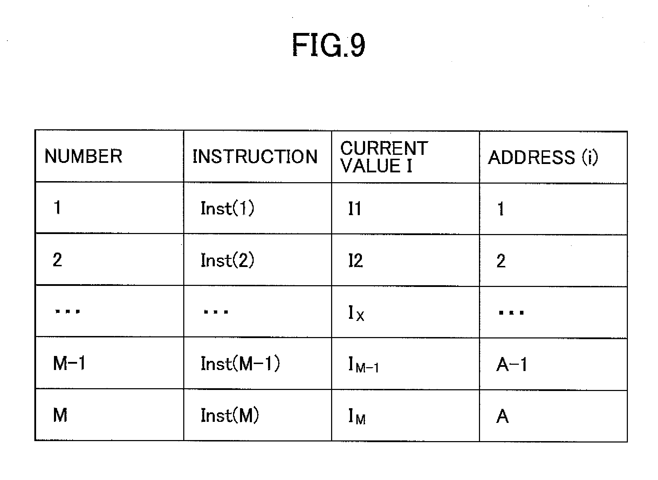

Next, with FIGs. 9 through 14, flowcharts for illustrating operations of instruction issuance control based on a consumption current change in the processor according to the above-described embodiment will be described.

FIG. 9 depicts relationships between respective consumption current values I of instructions Inst(1), Inst(2), ..., Inst(M) given to the instruction issuance control part 13X from the decoder 12 and addresses (i) in the program. The consumption current values I are obtained from the current table 13T such as that depicted in FIG. 6.

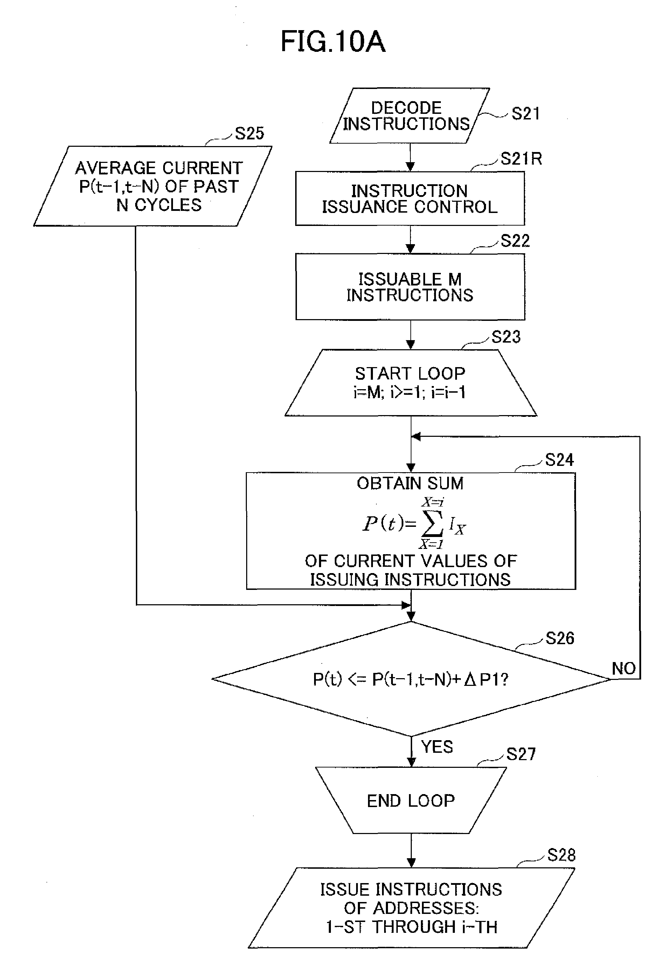

FIG. 10A is an operation flowchart (No. 1), for when a consumption current increases, according to the monitoring method 1. In step S21 of FIG. 10A, instructions fetched from the instruction cache 11 are decoded by the decoder 12. In steps S21R, S22, the instruction issuance control functional part 13R selects M simultaneously issuable instructions Inst(1), Inst(2), ..., Inst(M) from decoded instructions. After that, the instruction issuance control part 13X carries out loop operations of steps S23, S24, S25, S26 and S27. The loop operations are finished when a determination result of step S26 becomes YES while i decreases by 1 in sequence from the initial value M until i = 1.

In step S24, a sum P(t) of consumption currents is calculated for the instructions Inst(1), Inst(2), ..., Inst(i) from the first through i-th of the above-mentioned M instructions, by the calculation part 13CC of the current change calculation part 13C. In step S25, the calculation part 13CC of the current change calculation part 13C calculates the average value P(t-1, t-N) of the consumption current for the past N cycles. In step S26, the above-mentioned sum P(t) of consumption currents up to the i-th instruction and a value obtained from adding the above-mentioned limit value ΔP1 to the average value P(t-1, t-N) of the past N cycles are compared.

As a result, until the sum P(t) of the consumption currents up to the i-th instruction becomes equal to or less than the value obtained from adding the above-mentioned limit value ΔP1 to the average current value P(t-1, t-N) of the past N cycles (YES), the above-mentioned loop operations are repeated. It is noted that the initial value of i is M, and at first, the sum P(t) of consumption currents up to the i-th instruction is the consumption currents for the M instructions. When P(t) is equal to or less than the value obtained from adding the above-mentioned limit value ΔP1 to the average current value P(t-1, t-N) of the past N cycles (YES) at this point of time, the loop operations are finished (step S27), and the current change calculation part 13C reports the maximum number of issuable instructions = M to the instruction issuance adjustment part 13A. The instruction issuance adjustment part 13A issues instructions to the corresponding ones of the arithmetic and logic units 14A, 14B, 14C and 14D according to the priority order as mentioned above. The priority order includes a priority order among plural instructions for a case where there are the plural instructions that are simultaneously issuable.

On the other hand, in a case where the above-mentioned P(t) exceeds the value obtained from adding the above-mentioned limit value ΔP1 to the average current value P(t-1, t-N) of the past N cycles (NO) at the first point of time, the loop operations are continued. Then, as mentioned above, in a case where P(t) becomes equal to or less than the value obtained from adding the above-mentioned limit value ΔP1 to the average current value P(t-1, t-N) of the past N cycles (YES), the loop operations are finished. As a result, from the M currently issuable instructions, instructions are removed, one by one, from those having the larger addresses in sequence, and are removed until the calculated P(t) becomes equal to or less than the value obtained from adding the above-mentioned limit value ΔP1 to the average current value P(t-1, t-N) of the past N cycles. Therefore, from the M issuable instructions, instructions are selected, from those having the smaller addresses in sequence, and the (1 through i-th) instructions up to immediately before P(t) exceeds the value obtained from adding the above-mentioned limit value ΔP1 to the average current value P(t-1, t-N) of the past N cycles are finally selected. Then, information concerning the finally selected instructions is given to the instruction issuance adjustment part 13A. The instruction issuance adjustment part 13A issues the finally selected 1 through i-th instructions to the arithmetic and logic units 14A, 14B, 14C and 14D at the present cycle (step S28). It is noted that Ix in step S24 denotes a consumption current value per each instruction at the present cycle (see FIG. 9).

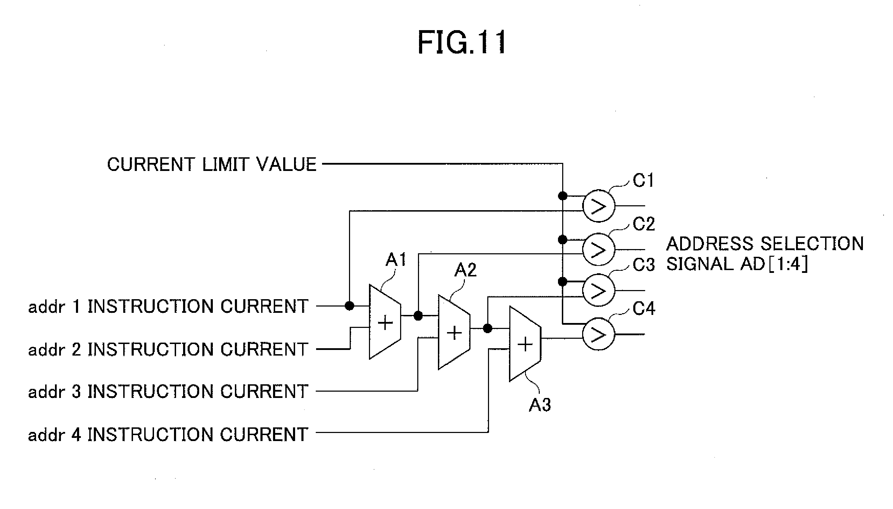

It is noted that in the case of FIG. 10A, loop operations are carried out. However, in order to obtain a similar result, a circuit of FIG. 11 may be used, for example. The circuit of FIG. 11 has adders A1, A2 and A3, and comparators C1, C2, C3 and C4. The limit value ΔP1 is input to one inputs of the respective comparators C1, C2, C3 and C4. Further, in the example of FIG. 11, as the M issuable instructions, for the purpose of convenience of explanation, 4 instructions (an instruction of addr1, an instruction of addr2, an instruction of addr3 and an instruction of addr4) are assumed. However, a similar circuit configuration may be applied even when the number of issuable instructions becomes 5 or more. It is noted that the above-mentioned instruction of addr1, instruction of addr2, instruction of addr3 and instruction of addr4 may be, for example, an addition (ADD) instruction and a subtraction (SUB) instruction as arithmetic operations, and an AND instruction and an OR instruction as logic operations, and/or the like.

The adder A1 obtains the sum of the consumption currents for total two instructions of the instruction of addr1 and instruction of addr2. The adder A2 obtains the sum of the output of the adder A1 and the consumption current for the instruction of addr3, i.e., obtains the sum of the consumption currents for the total three instructions of addr1, addr2 and addr3. Similarly, the adder A3 obtains the sum of the output of the adder A2 and the consumption current for the instruction of addr4, i.e., obtains the sum of the consumption currents for the total four instructions of addr1, addr2, addr3 and addr4. Then, the comparators C1, C2, C3 and C4 compare the respective ones of the consumption current for the instruction of addr1, the output of the adder A1, the output of the adder A2 and the output of the adder A3 with Δ P1. That is, the comparator C1 compares the consumption current P(t) concerning the instruction addr1 with ΔP1, and the comparator C2 compares the consumption current P(t) of the sum concerning the respective instructions addr1 and addr2 with ΔP1. Similarly, the comparator C3 compares the consumption current P(t) of the sum concerning the respective instructions addr1, addr2 and addr3 with ΔP1, and the comparator C4 compares the consumption current P(t) of the sum concerning the respective instructions addr1, addr2, addr3 and addr4 with ΔP1.

The respective comparators C1 through C4 output 1 in a case where P(t) is greater than or equal to ΔP, and output 0 in a case where less than ΔP. Then, the circuit of FIG. 11 generates an address selection signal AD[1:4] as the outputs of the comparators C1 through C4. For example, a setting may be made such that when AD[1:4] = 0000, the 4 instructions of addr1 through 4 are issued, and when AD[1:4] = 0001, the 3 instructions of addr1 through 3 are issued. Similarly, a setting may be made such that when AD[1:4] = 0011, the 2 instructions of addr1 through 2 are issued, and when AD[1:4] = 0111, the instruction of addr1 is issued.

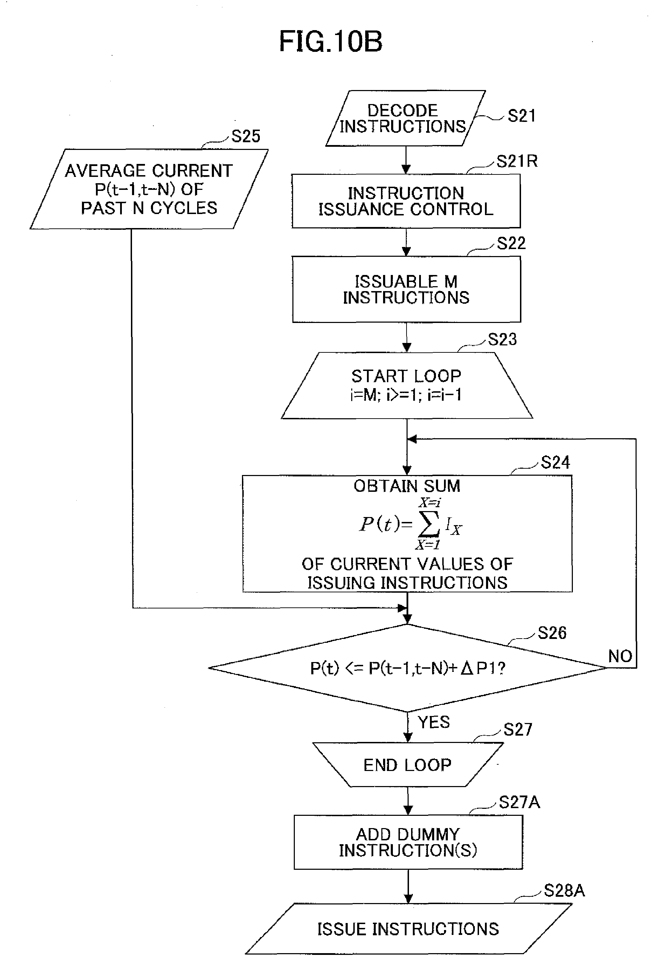

FIG. 10B is an operation flowchart (No. 2) for when a consumption current increases, according to the monitoring method 1. The operation flowchart (No. 2) of FIG. 10B depicts a method different from the above-described operation flowchart of FIG. 10A. In the flowchart (No. 2) of FIG. 10B, steps S21 through S27 are the same as step S21 through S27 in the flowchart (No. 1) of FIG. 10A, and duplicate description will be omitted. In a case of the operation flowchart (No. 2) of FIG. 10B, a dummy instruction may be added in step S27A. As mentioned above, in step S27, the loop operations are finished when P(t) is equal to or less than the value obtained from adding the above-mentioned limit value ΔP1 to the average current value P(t-1, t-N) of the past N cycles (YES). Here, for example, a case may be assumed where, at the time the loop operations are finished, the above-mentioned P(t) is smaller than the average current value P(t-1, t-N) of the past N cycles, i.e., the consumption current will decrease, in a case where the above-mentioned limit value ΔP1 is small, or the like. In such a case, it is possible to mitigate the decreasing of the consumption current by adding a dummy instruction having a consumption current depending on the difference between the above-mentioned P(t) and P(t-1, t-N) (the decreasing amount of the consumption current). As a dummy instruction for this purpose, it is possible to prepare plural dummy instructions having different consumption currents, by separately providing a dummy instruction of consumption current value = 100 [µA] in addition to the dummy instruction of consumption current value = 200 [µA] mentioned above with FIG. 6. Then, depending on the difference between the above-mentioned P(t) and P(t-1, t-N) (the decreasing amount of the consumption current), the dummy instruction of the most suitable consumption current may be appropriately selected from the plural dummy instructions having different consumption currents, and may be added. In this case, the dummy instruction is added in step S27A to the 1 through i-th instructions finally selected in the loop operations of the above-mentioned steps S23, S24, S25, S26 and S27. Then, thus obtained information indicating the instructions to be issued is given to the instruction issuance adjustment part 13A. The instruction issuance adjustment part 13A issues the instructions indicated by the given information to the arithmetic and logic units 14A, 14B, 14C and 14D at the present cycle (step S28A).

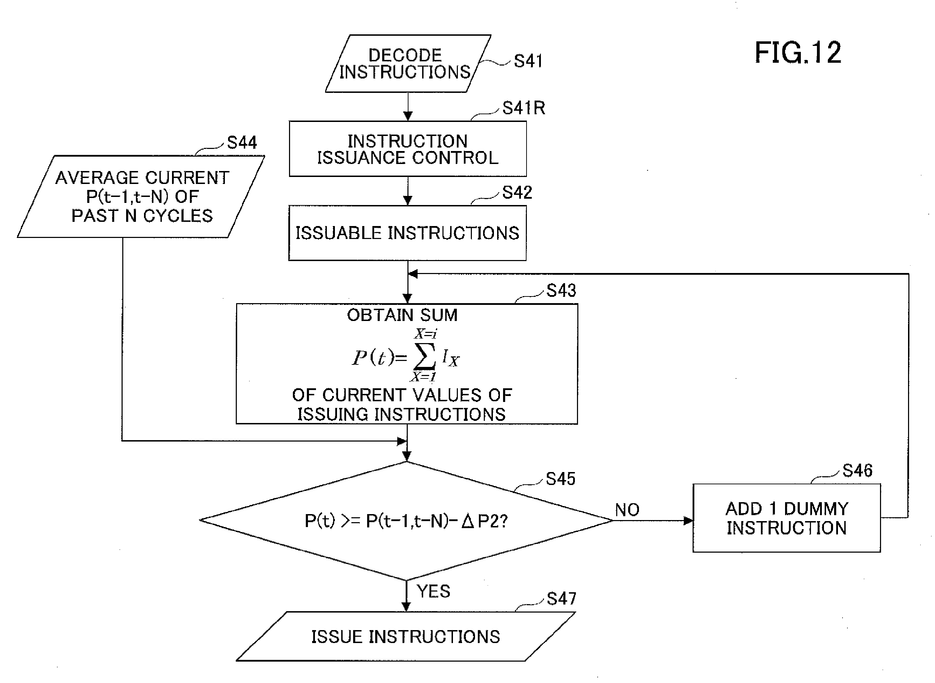

FIG. 12 is an operation flowchart for when a consumption current decreases, according to the monitoring method 1. In FIG. 12, in step S41, instructions fetched from the instruction cache 11 are decoded by the decoder 12. In steps S41R and S42, the decoded instructions are given to the instruction issuance control functional part 13R of the instruction issuance control part 13X, and M simultaneously issuable instructions Inst(1), Inst(2), ..., Inst(M) are selected. After that, the instruction issuance control part 13X carries out loop operations of steps S43, S45 and S46. In the loop operations, in step S46, the number of dummy instructions to be issued is increased by 1 in sequence, and the loop operations are finished when a determination result of step S45 becomes YES.

In step S43, the calculation part 13CC of the current change calculation part 13C calculates the sum P(t) of the consumption currents for the above-mentioned M instructions Inst(1), Inst(2), ..., Inst(M) and the dummy instructions added in step S46. In step S44, the calculation part 13CC of the current change calculation part 13C calculates the average current value P(t-1, t-N) for the past N cycles. Then, in step S45, the sum P(t) of the consumption currents for the issuable instructions and the dummy instructions, and the value obtained from subtracting the above-mentioned limit value Δ P2 from the average current value P(t-1, t-N) for the past N cycles are compared. As a result, the loop operations are repeated until the sum P(t) of the consumption currents for the issuable instructions and the dummy instructions becomes greater than or equal to the value obtained from subtracting the above-mentioned limit value ΔP2 from the average current value P(t-1, t-N) for the past N cycles (YES). As a result, such a number of dummy instructions to be issued (i.e., "the required number of dummy instructions to be issued") is determined that the consumption current value P(t) obtained from adding dummy instructions as appropriate may be greater than or equal to the value obtained from subtracting the above-mentioned limit value ΔP2 from the average current value P(t-1, t-N) for the past N cycles. The thus obtained required number of dummy instructions to be issued is given to the instruction issuance adjustment part 13A. The instruction issuance adjustment part 13A issues the instructions obtained from adding the required number of dummy instructions to be issued to the issuable instructions, to the arithmetic and logic units 14A, 14B, 14C and 14D at the present cycle (step S47).

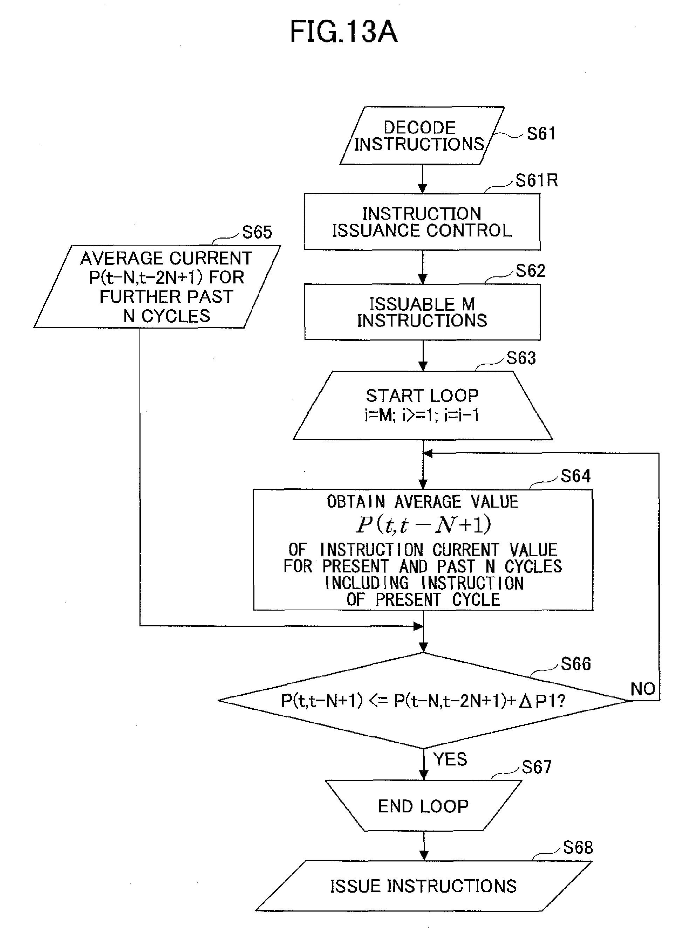

FIG. 13A is an operation flowchart (No. 1) for when a consumption current increases, according to the monitoring method 2. In step S61 of FIG. 13A, instructions fetched from the instruction cache 11 are decoded by the decoder 12. In steps S61R, S62, the decoded instructions are transferred to the instruction issuance control functional part 13R of the instruction issuance control part 13X, and M simultaneously issuable instructions Inst(1), Inst(2), ..., Inst(M) are selected. After that, the instruction issuance control part 13X carries out loop operations of steps S63, S64, S66 and S67. The loop operations are finished when a determination result of step S66 becomes YES while i decreases by 1 in sequence from the initial value M until i = 1.

In step S64, the sum P(t) of the consumption currents is calculated for the instructions Inst(1), Inst(2), ..., Inst(i) from the first through i-th of the above-mentioned M instructions, by the calculation part 13CC of the current change calculation part 13C. Then, the average value P(t, t-N+1) of the consumption current for the present and past N cycles to which the consumption current P(t) of the present cycle has been added is obtained. In step S65, the calculation part 13CC of the current change calculation part 13C calculates the average value P(t-N, t-2N+1) of the consumption current for the further past N cycles. Then, in step S66, the above-mentioned average value P(t, t-N+1) of the consumption current for the present and past N cycles to which the present cycle has been added and the value obtained from adding the above-mentioned limit value ΔP1 to the average current value (t-N, t-2N+1) for the further past N cycles are compared. As a result, the loop operations are continued until the average value P(t, t-N+1) of the consumption current for the present and past N cycles becomes equal to or less than the value obtained from adding the above-mentioned limit value ΔP1 to the average current value (t-N, t-2N+1) for the further past N cycles (YES). The same as the above-mentioned, the initial value of i is M, and at first, the sum P(t) of consumption currents up to the i-th instruction is the consumption currents for the M instructions. When, at this point of time, the average current value P(t, t-N+1) of the present and past N cycles is equal to or less than the value obtained from adding the above-mentioned limit value ΔP1 to the average current value P(t-N, t-2N+1) for the further past N cycles (YES), the loop operations are finished (step S67), and the current change calculation part 13C reports the "maximum number of issuable instructions = M" to the instruction issuance adjustment part 13A. The instruction issuance adjustment part 13A issues the instructions to the corresponding ones of the arithmetic and logic units 14A, 14B, 14C and 14D according to the priority order as mentioned above.

On the other hand, in a case where, at the above-mentioned first point of time, the average current value P(t, t-N+1) for the present and past N cycles exceeds the value obtained from adding the above-mentioned limit value ΔP1 to the average current value P(t-N, t-2N+1) for the further past N cycles (NO), the loop operations are continued. Then, as mentioned above, in a case where the average current value P(t, t-N+1) for the present and past N cycles becomes equal to or less than the value obtained from adding the above-mentioned limit value ΔP1 to the average current value P(t-N, t-2N+1) for the further past N cycles (YES), the loop operations are finished. As a result, from the M currently issuable instructions, instructions are removed one by one, from those having the larger addresses in sequence, and are removed until the calculated average current value P(t, t-N+1) for the present and past N cycles becomes equal to or less than the value obtained from adding the above-mentioned limit value ΔP1 to the average current value P(t-N, t-2N+1) for the further past N cycles. Therefore, from the M issuable instructions, instructions are selected, from those having the smaller addresses in sequence, and the (1 through i-th) instructions up to immediately before the average current value P(t, t-N+1) for the present and past N cycles exceeds the value obtained from adding the above-mentioned limit value ΔP1 to the average current value P(t-N, t-2N+1) for the further past N cycles are finally selected. Then, information concerning the finally selected instructions is given to the instruction issuance adjustment part 13A. The instruction issuance adjustment part 13A issues the finally selected 1 through i-th instructions to the arithmetic and logic units 14A, 14B, 14C and 14D at the present cycle (step S68).

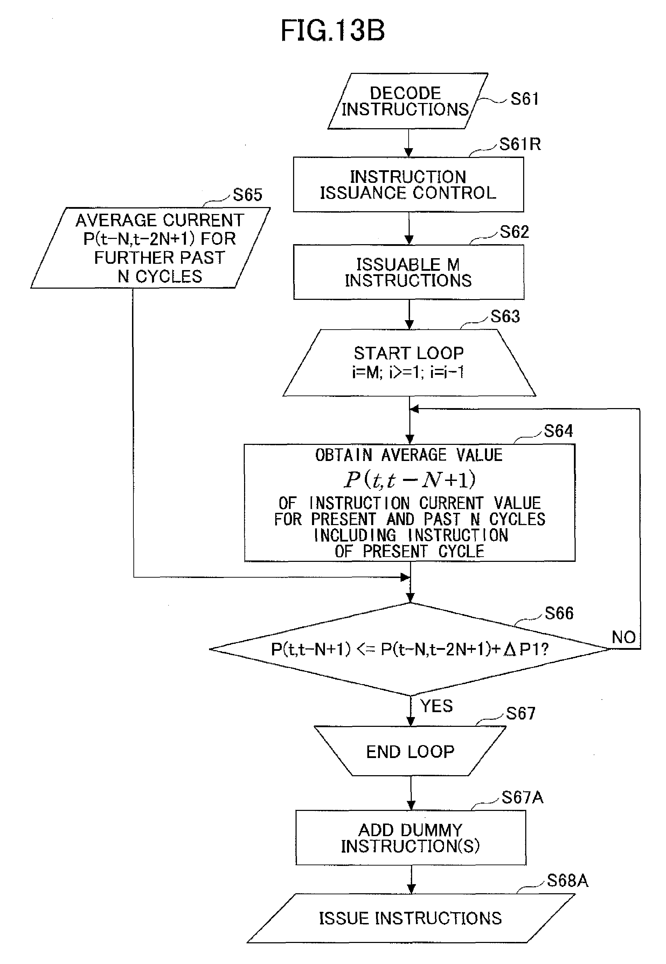

FIG. 13B is an operation flowchart (No. 2) for when a consumption current increases, according to the monitoring method 2. The operation flowchart (No. 2) depicts a method different from the above-described operation flowchart (No. 1) of FIG. 13A. In the flowchart (No. 2) of FIG. 13B, steps S61 through S67 are the same as step S61 through S67 in the flowchart (No. 1) of FIG. 13A, and duplicate description will be omitted. In a case of the operation flowchart (No. 2) of FIG. 13B, a dummy instruction may be added in step S67A. As mentioned above, in step S67, the loop operations are finished when the average current value P(t, t-N+1) for the present and past N cycles is equal to or less than the value obtained from adding the above-mentioned limit value ΔP1 to the average current value P(t-N, t-2N+1) for the further past N cycles. Here, for example, a case may be assumed where, at the time the loop operations are finished, the above-mentioned average current value P(t, t-N+1) for the present and past N cycles is less than the average current value P(t-N, t-2N+1) for the further past N cycles, i.e., the consumption current will decrease, in a case where the above-mentioned limit value ΔP1 is small or the like. In such a case, as appropriate, it is possible to mitigate the decreasing of the consumption current by adding a dummy instruction having a consumption current depending on the difference between the above-mentioned P(t-N, t-2N+1) and the above-mentioned P(t, t-2N+1) (the decreasing amount of the consumption current). As a dummy instruction for this purpose, it is possible to prepare plural dummy instructions having different consumption currents, by separately providing a dummy instruction of consumption current value = 100 [µA] in addition to the dummy instruction of consumption current value = 200 [µA] mentioned above with FIG. 6. Then, depending on the difference between the above-mentioned P(t-N, t-2N+1) and the above-mentioned P(t, t-2N+1) (the decreasing amount of the consumption current), the dummy instruction of the most suitable consumption current may be appropriately selected from the plural dummy instructions having different consumption currents, and may be added. In this case, the dummy instruction is added in step S67A to the 1 through i-th instructions finally selected in the loop operations of the above-mentioned steps S63, S64, S66 and S67. Then, thus obtained information indicating the instructions to be issued is given to the instruction issuance adjustment part 13A. The instruction issuance adjustment part 13A issues the instructions indicated by the given information, to the arithmetic and logic units 14A, 14B, 14C and 14D at the present cycle (step S68A).

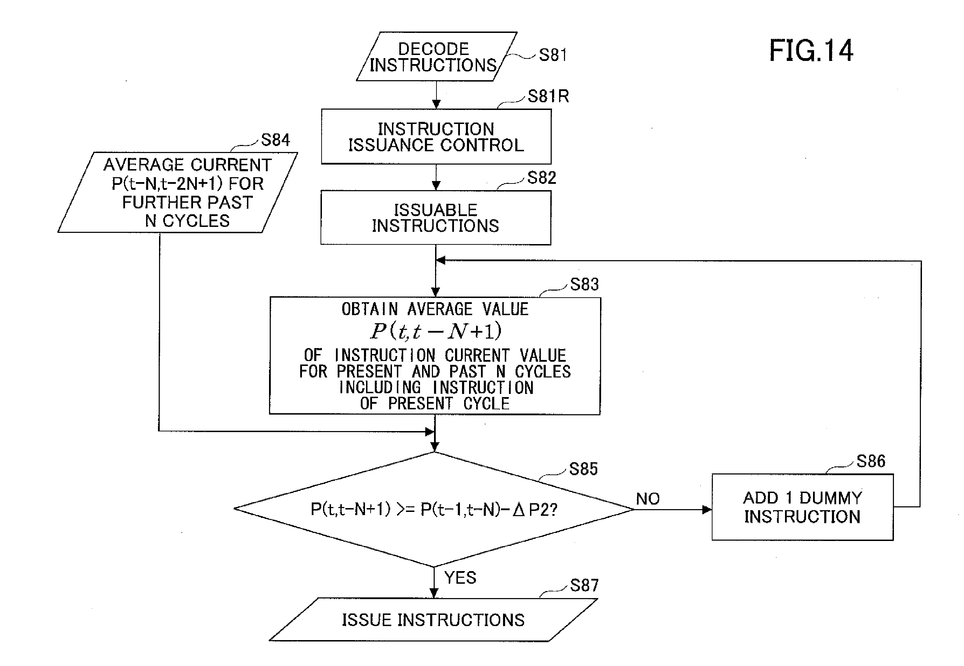

FIG. 14 is a flowchart for when a consumption current decreases, according to the monitoring method 2. In FIG. 14, in step S81, instructions fetched from the instruction cache 11 are decoded by the decoder 12. In steps S81R and S82, the decoded instructions are given to the instruction issuance control functional part 13R of the instruction issuance control part 13X, and M simultaneously issuable instructions Inst(1), Inst(2), ..., Inst(M) are selected. After that, the instruction issuance control part 13X carries out loop operations of steps S83, S85 and S86. In the loop operations, in step S86, the number of dummy instructions to be issued is increased by 1 in sequence, and the loop operations are finished when a determination result of step S85 becomes YES.

In step S83, the calculation part 13CC of the current change calculation part 13C calculates the sum P(t) of the consumption currents for the above-mentioned M instructions Inst(1), Inst(2), ..., Inst(M) and the dummy instructions added in step S46. Further, the average value P(t, t-N+1) of the consumption current for the present and past N cycles to which the consumption current P(t) of the present cycle has been added is obtained. In step S84, the calculation part 13CC of the current change calculation part 13C calculates the average value P(t-N, t-2N+1) of the consumption current for the further past N cycles. Then, in step S85, the average current value P(t, t-N+1) for the present and past N cycles to which the present cycle has been added and the value obtained from subtracting the above-mentioned limit value ΔP2 from the average current value (t-N, t-2N+1) for the further past N cycles are compared. As a result, the loop operations are continued until the average current value P(t, t-N+1) for the present and past N cycles becomes greater than or equal to the value obtained from subtracting the above-mentioned limit value Δ P2 from the average current value (t-N, t-2N+1) for the further past N cycles (YES). As a result, dummy instructions are added one by one so that the average current value P(t, t-N+1) for the present and past N cycles to which the consumption current at the present cycle has been added, to which the required number of dummy instructions have been added, becomes greater than or equal to the value obtained from subtracting the above-mentioned limit value ΔP2 from the average current value (t-N, t-2N+1) for the further past N cycles (step S86). The thus obtained number of the required dummy instructions to be issued is given to the instruction issuance adjustment part 13A. The instruction issuance adjustment part 13A issues the instructions obtained from adding the required number of dummy instructions to be issued to the issuable instructions, to the arithmetic and logic units 14A, 14B, 14C and 14D at the present cycle (step S87).

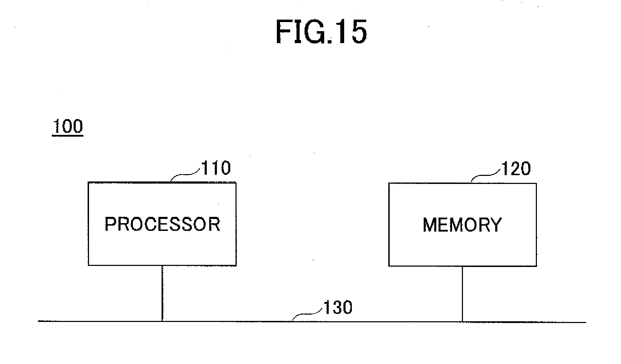

FIG. 15 is a block diagram for illustrating a hardware configuration example of an information processing apparatus such as a server to which the above-mentioned processor according to the embodiment is applicable. The information processing apparatus includes a processor 110, a memory 120 as a storage unit, and a bus 130 that connects the processor 110 and the memory 120. The memory 120 stores a program in which instructions that the processor 110 executes are written, data which is a target on which the instructions are executed, data as results of execution of the instructions, and so forth. As the processor 110, one having the configuration depicted in FIG. 2 may be applied. In this case, an instruction cache 11 of the processor depicted in FIG. 2 obtains the program stored in the memory 120 and stores the program, a decoder 12 fetches instructions of the program and decodes them, and an instruction issuance control part 13X issues the decoded instructions to arithmetic and logic units 14A, 14B, 14C and 14D of an arithmetic and logic mechanism 14. The arithmetic and logic units 14A, 14B, 14C and 14D execute the issued instructions. The instruction issuance control part 13X has the same configuration as the instruction issuance control part 13X in the processor according to the embodiment described above with FIGs. 2 through 14.

## Claims

1. A processor comprising:
an instruction storing part that stores instructions;
an instruction decoding part that decodes the instructions obtained from the instruction storing part;
an arithmetic and logic part that executes issued instructions; and
an instruction issuance control part that issues the instructions decoded by the instruction decoding part to the arithmetic and logic part, calculates a consumption current value that has been consumed by the arithmetic and logic part with instructions issued during a first predetermined period and a consumption current estimated value for a current that is consumed by the arithmetic and logic part with instructions issuable during a second predetermined period of the decoded instructions, and inhibits issuance of instructions of the decoded instructions in the second predetermined period in a case where a change amount of the consumption current estimated value with respect to the consumption current value exceeds a predetermined limit value.

2. The processor according to claim 1, wherein
the instruction issuance control part issues a dummy instruction to the arithmetic and logic part instead of the instructions for which issuance has been inhibited.

3. The processor according to claim 1 or 2, wherein
the consumption current value is an average value of the consumption current of the arithmetic and logic part during the first predetermined period, and
the consumption current estimated value is an average value of the consumption current of the arithmetic and logic part during the second predetermined period.

4. The processor according to claim 1 or 2, wherein
the consumption current value is an average value of the consumption current of the arithmetic and logic part during the first predetermined period, and
the consumption current estimated value is an estimated value of the consumption current of the arithmetic and logic part at a present cycle.

5. An information processing apparatus having a storage unit that stores instructions and a processor that is connected with the storage unit, the processor comprising:
an instruction storing part that stores instructions obtained from the storage unit;
an instruction decoding part that decodes the instructions obtained from the instruction storing part;
an arithmetic and logic part that executes issued instructions; and
an instruction issuance control part that issues the instructions decoded by the instruction decoding part to the arithmetic and logic part, calculates a consumption current value that has been consumed by the arithmetic and logic part with instructions issued during a first predetermined period and a consumption current estimated value for a current that is consumed by the arithmetic and logic part with instructions issuable during a second predetermined period of the decoded instructions, and inhibits issuance of instructions of the decoded instructions in the second predetermined period in a case where a change amount of the consumption current estimated value with respect to the consumption current value exceeds a predetermined limit value.

6. The information processing apparatus according to claim 5, wherein
the instruction issuance control part issues a dummy instruction to the arithmetic and logic part instead of the instructions for which issuance has been inhibited.

7. The information processing apparatus according to claim 5 or 6, wherein
the consumption current value is an average value of the consumption current of the arithmetic and logic part during the first predetermined period, and
the consumption current estimated value is an average value of the consumption current of the arithmetic and logic part during the second predetermined period.

8. The information processing apparatus according to claim 5 or 6, wherein
the consumption current value is an average value of the consumption current of the arithmetic and logic part during the first predetermined period, and
the consumption current estimated value is an estimated value of the consumption current of the arithmetic and logic part at a present cycle.

9. A control method of a processor that has an instruction storing part that stores instructions, the control method comprising:
the step of an instruction decoding part the processor has decoding the instructions obtained from the instruction storing part;
the step of an arithmetic and logic part the processor has executing issued instructions;
the step of an instruction issuance control part the processor has calculating a consumption current value that has been consumed by the arithmetic and logic part with instructions issued during a first predetermined period and a consumption current estimated value for a current consumed by the arithmetic and logic part with instructions issuable during a second predetermined period of the decoded instructions; and
the step of the instruction issuance control part the processor has issuing instructions decoded by the instruction decoding part, and inhibiting issuance of instructions of the decoded instructions in the second predetermined period in a case where a change amount of the consumption current estimated value with respect to the consumption current value exceeds a predetermined limit value.

10. The control method of the processor according to claim 9, wherein
the instruction issuance control part issues a dummy instruction to the arithmetic and logic part instead of the instructions for which issuance has been inhibited.

11. The control method of the processor according to claim 9 or 10, wherein
the consumption current value is an average value of the consumption current of the arithmetic and logic part during the first predetermined period, and
the consumption current estimated value is an average value of the consumption current of the arithmetic and logic part during the second predetermined period.

12. The control method of the processor according to claim 9 or 10, wherein
the consumption current value is an average value of the consumption current of the arithmetic and logic part during the first predetermined period, and
the consumption current estimated value is an estimated value of the consumption current of the arithmetic and logic part at a present cycle.
